# EUROPEAN PATENT SPECIFICATION

(11) **EP 1 834 125 B1**
(45) Date of publication and mention of the grant of the patent: **22.04.2009**
(21) Application number: 05818605.7
(22) Date of filing: 09.12.2005
(51) Int. Cl.: F16L 41/14

(54) **LATERAL PIPE ADAPTOR**
ADAPTER FÜR LATERALES ROHR
RACCORD LATÉRAL POUR TUYAU

(30) Priority: 16.12.2004 GB 0427533
(43) Date of publication of application: 19.09.2007
(73) Proprietor: Flex-Seal Couplings Limited, Newlands Way, Valley Park Wombwell, Barnsley S73 0UW (GB)
(72) Inventor: MILNES, David, John, Rotherham S60 3EL (GB)
(74) Representative: Hulse, Thomas Arnold
(86) International application number: PCT/GB2005/004751
(87) International publication number: WO 2006/064191

(56) References cited:
- DE-A1- 10 047 758
- GB-A- 1 576 038
- GB-A- 2 372 083

## Description

This invention relates to a lateral pipe adaptor, more particularly - but not exclusively for connecting into a structured wall plastic pipe a lateral pipe of smaller diameter.

Structured wall plastic pipes are used widely for drainage applications throughout Europe and are manufactured from 100mm bore to 1050mm and above. These pipes can be made from a range of plastic materials, such as polyethylene or polypropylene depending on the manufacturer. They are formed in a two-layer construction. The inner layer provides a smooth surface for the bore of the pipe. The outer layer is of corrugated construction that creates ribs around the circumference of the pipe, these ribs being equispaced along the length of the pipe. The ribs are also hollow. Their purpose is to provide structural strength in the pipe wall.

It is often necessary to connect into these pipes, smaller lateral pipes from gullies or other such drainage points. Normal practice with these pipe systems is to use a purpose made branch fitting. Due to the popularity of using lateral adaptors to make connections into rigid pipe systems, e.g. concrete or clay, there is a demand for a similar solution for flexible pipes (plastic).

The lateral pipe will commonly be of around 150mm bore and often of similar construction to the main pipe, in this case structured wall plastic. Other materials such as clay, concrete or solid wall plastic will also be used in some circumstances. The method of access into the pipe is by the use of a holesaw that leaves a fairly untidy cut surface that cannot be reasonably or easily made good on site. It is a requirement that any lateral adaptor will overcome this and create and maintain a leaktight connection that prevents leakage from the pipe and ingress of groundwater. A lateral pipe adaptor for a main pipe, such as a structured wall plastics pipe, is described in GB-A-2 372 083 as comprising a cylindrical sleeve with a flange extending outwardly at one end and curved to match the internal curvature of the main pipe and adapted at the other end for connection of a branch pipe (e.g. by provision of a spigot or socket), an annular movable member slidable on the sleeve and having a curved face to match the external curvature of the main pipe, an elastomeric seal ring held captive between the flange of the sleeve and the movable member and having inner and outer curved faces to match the curvature of the flange on the sleeve and the movable member respectively, an annular abutment member adjacent the face of the movable member remote from its curved face, at least one projection on the sleeve (e.g. an annular shoulder) abutted by the face of the abutment member remote from the movable member, and loading means (e.g. screws) for urging the movable member away from the abutment member to compress the seal ring axially after passing of the flange of the sleeve through a hole in the main pipe to bring the seal ring within the hole, the axial compression of the seal ring causing radial expansion of the seal ring into sealing engagement with all parts of the hole in the main pipe and all round the sleeve. A socket provided for the connection of a branch pipe may be integral with the sleeve or an interchangeable component attached to the sleeve.

The seal ring preferably had an axial length appreciably in excess of the depth of the hole in the main pipe, to ensure that when axially compressed in a hole in a structured wall plastics pipe all the edges within the hole are sealingly contacted by the seal ring.

The sleeve preferably had an increasing outer diameter adjacent its flange, to promote radial expansion of the seal ring from its face adjacent the flange, particularly to ensure sealing contact all round the inner edge of the hole in a structured wall plastics pipe.

The sleeve and the movable and abutment members were conveniently moulded in plastics, and the movable member was provided with a curved flange (or "saddle") providing the curved face matching the outer curvature of the main pipe co-moulded with a thin cylindrical wall having bosses with shallow recesses for location of axial screws projecting from lugs on the abutment member, and the lugs of the latter were provided with non-circular recesses to accommodate non-rotatable nuts for the axial screws.

For convenience of manufacture and assembly, the movable member was formed in two identical parts, split on a diametral line and each provided with at least one projection and one recess for engagement with the recess and projection, respectively, of the other upon fitting of the parts round the sleeve.

Likewise, the abutment member was formed with a split at one side only and provided with overlapping bosses having respectively a projection and a recess for engagement with each other after fitting the abutment member round the sleeve in abutting engagement with the projection (e.g. annular shoulder) on the sleeve.

The object of the present invention is to provide a lateral pipe adaptor generally of the type described above but adaptable by simple means for use with main pipes of widely varying diameter and/or wall thickness.

According to the present invention, a lateral pipe adaptor for a main pipe comprises a cylindrical sleeve with a flange extending outwardly at one end and adapted at the other end for connection of a branch pipe, an annular movable member slidable on the sleeve and having a concave face towards the flange of the sleeve, an elastomeric seal ring held captive between the flange of the sleeve and the movable member, an annular abutment member adjacent the face of the movable member remote from flange of the sleeve, at least one projection on the sleeve abutted by the face of the abutment member remote from the movable member, and loading means for urging the movable member away from the abutment member to compress the seal ring axially after passing of the flange of the sleeve through a hole in the main pipe to bring the seal ring within the hole, the axial compression of the seal ring causing radial expansion of the seal ring into sealing engagement all round the sleeve and at least all round the part of the hole in the main pipe adjacent the inner surface of the main pipe, characterised by a plurality of abutment rings for selective interposition between the annular abutment member and the movable member, and a plurality of spacer rings having inner and outer diameters equal to those of the seal ring for selective interposition between the seal ring and the movable member, selection of one or more abutment rings and/or one or more spacer rings being determined in relation to the difference between the inner and outer diameters of the main pipe.

The constructions of the sleeve, the movable member and the abutment member are preferably substantially the same as described in GB-A-2 372 083, but it will be appreciated that the sleeve may have to be of greater length than before, that the concave face on the movable member can match the outer curvature of only one diameter of main pipe (preferably the mean), and the curvature of the flange on the sleeve can match the inside diameter of one diameter of main pipe (again, preferably the mean). The seal ring preferably has a concave inner face matching the curvature of the flange on the sleeve, while the outer face of the seal ring is flat, to enable it to have full abutting engagement with a flat spacer ring. The movable member preferably has an annular rib or a pair of concentric annular ribs projecting from its curved face, having innermost and outermost diameters equal to those of the sealing ring and spacer rings, and having a flat annular face or faces for selective abutment with a spacer ring or with the flat face of the seal ring.

As with the sleeve and the movable and abutment members described in GB-A-2 372 083, the abutment rings and the spacer rings are conveniently moulded in plastics, with each of the abutment rings and each of the spacer rings formed by two semi-annular parts each provided with a projection and recess at respective ends for engagement with the recess and projection, respectively, of the other part upon fitting of the parts round the sleeve, and the parts of the abutment rings having bosses each with a shallow recess in one face and a complementary projection on its opposite face, for registration of the recesses with the axial screws, and registration of the projections with the recesses in the bosses on the movable member or with the recesses in the bosses of another abutment ring.

The abutment rings and the spacer rings may be all of equal thickness (e.g., 10mm), but one abutment ring and/or one spacer ring may be of different thickness (e.g. 5mm or 15 mm) to afford intermediate increments in assemblies of abutment rings and/or spacer rings.

An embodiment of the invention will now be described, by way of example only, with reference to the accompanying drawings, in which:-
Figure 1 is a fragmentary transverse section through a main pipe including a hole for the purpose of connecting a lateral pipe and showing in relation thereto a lateral pipe adaptor in accordance with the invention as initially applied;
Figure 2 corresponds to Figure 1 but shows the adaptor after operation to effect sealing within the hole;
Figure 3 also corresponds to Figure 1 but shows the adaptor as modified to suit a hole in a main pipe of greater thickness than the main pipe of Figures 1 and 2;
Figure 4 is another corresponding to Figure 1 but shows the adaptor as modified to suit a hole in a main pipe of lesser diameter and lesser thickness than the main pipe of Figures 1 and 2;
Figure 5 is a part-sectional side elevation of the flanged sleeve seen in Figures 1 to 4;
Figure 6 is a section taken from the line VI- VI of Figure 5;
Figure 7 is a plan view of one of the identical halves of the annular movable member seen in Figures 1 to 4;
Figure 8 is a side elevation of a half of the annular movable member as viewed in the direction of arrow VIII of Figure 7;
Figure 9 is a plan view of the elastomeric seal ring seen in Figures 1 to 4;
Figure 10 is a section taken from the line X-X of Figure 9;
Figure 11 is a plan view of the split annular abutment member seen in Figures 1 to 4;
Figure 12 is a side elevation of the annular abutment member as viewed in the direction of the arrow XII of Figure 11;
Figure 13 is a plan view of the two halves of one of the abutment rings shown in Figures 1, 2 and 4;
Figure 14 is a side elevation of one half of the abutment ring as viewed in the direction of the arrow XIV of figure 13;
Figure 15 is a plan view of the two halves of one of the spacer rings as shown in Figures 1, 2 and 3; and
Figure 16 is a side elevation of the two halves of the spacer ring as viewed in the direction of the arrow XVI-XVI of Figure 15.

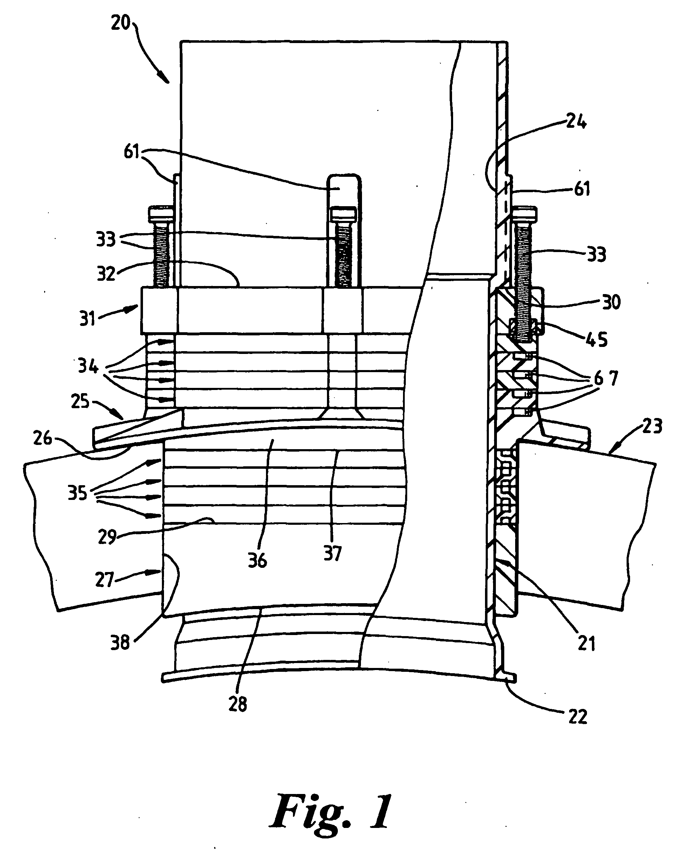

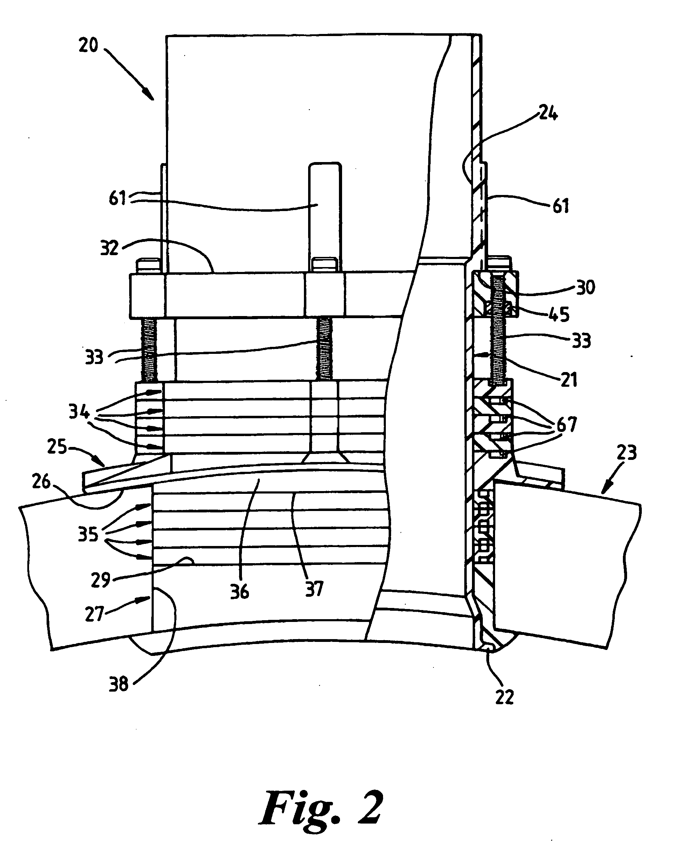

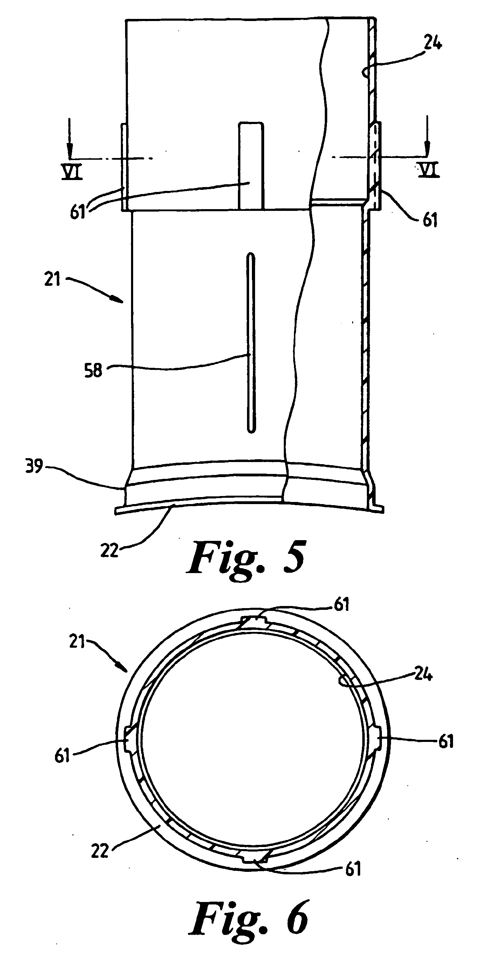

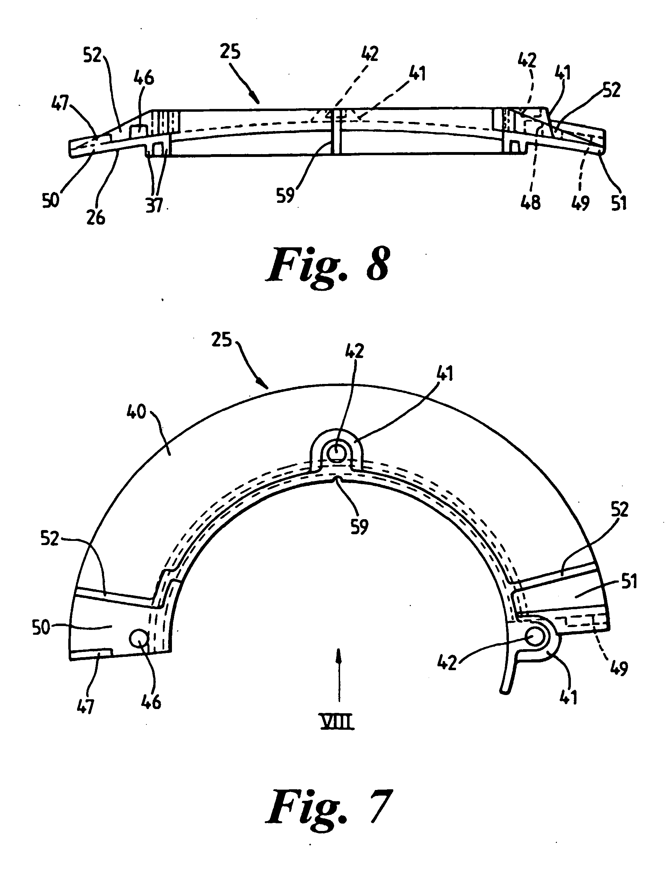

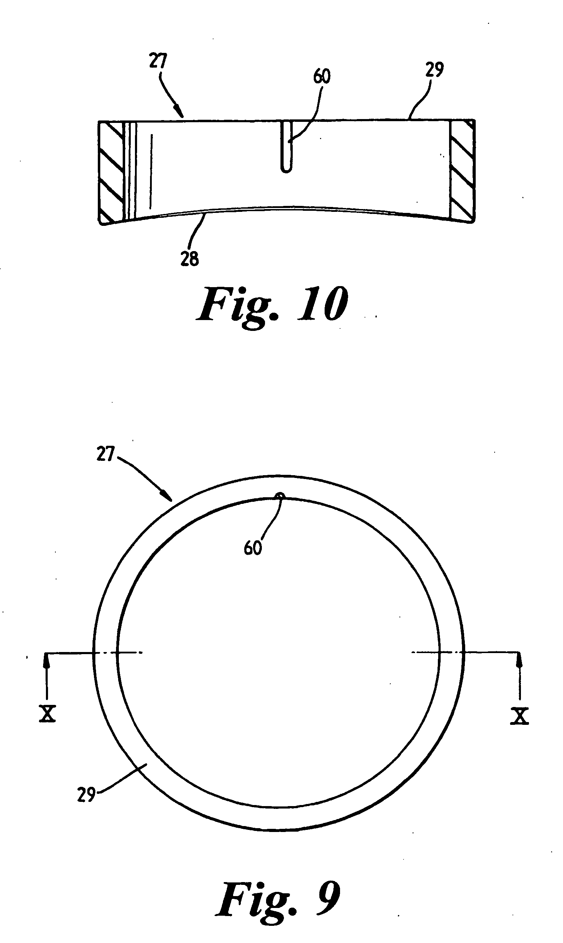

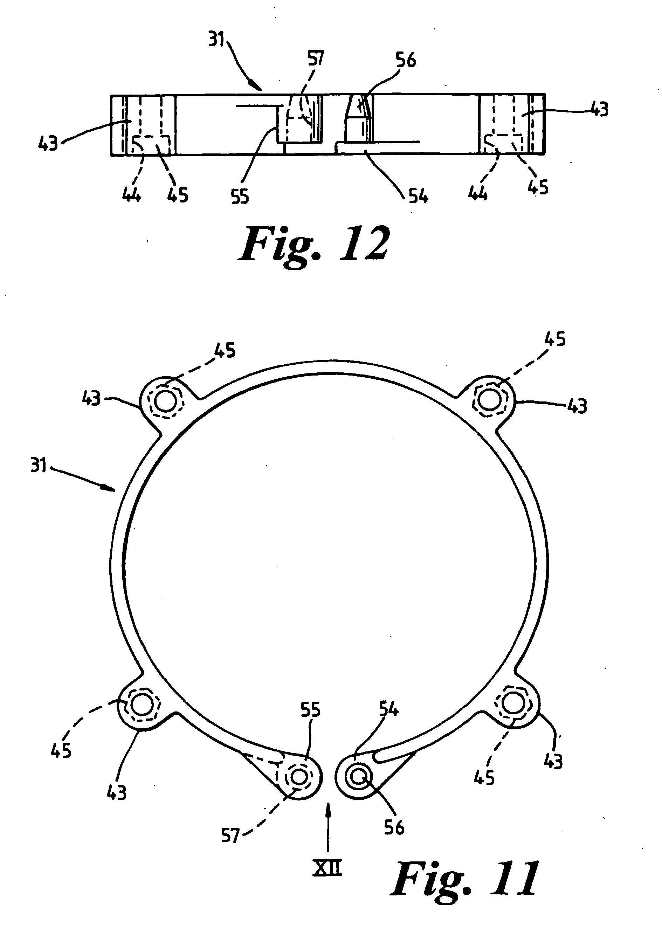

In Figures 1 and 2 a lateral pipe adaptor 20 comprises a sleeve 21 (see also Figures 5 and 6) with a flange 22 extending outwardly at one end and curved to match the internal curvature of a main pipe 23 and adapted at the other end (as by means of a socket 24 or a spigot, not illustrated) for connection of a branch pipe (not shown), an annular movable member 25 (see also Figures 7 and 8) slidable on the sleeve 21 and having a curved face 26 to match the external curvature of a main pipe of mean outer diameter in the range catered for, an elastomeric seal ring 27 (see also Figures 9 and 10) held captive between the flange 22 on the sleeve 21 and the movable member 25, the seal ring having an inner curved face 28 to match the curvature of the flange 22 on the sleeve 21 and a flat outer face 29, an annular shoulder 30 on the sleeve 21, an annular abutment member 31 (see also Figures 11 and 12) with a face 32 remote from the movable member 25 abutting the shoulder 30, and loading means (in the form of axial screws 33) for urging the movable member 25 away from the abutment member 31.

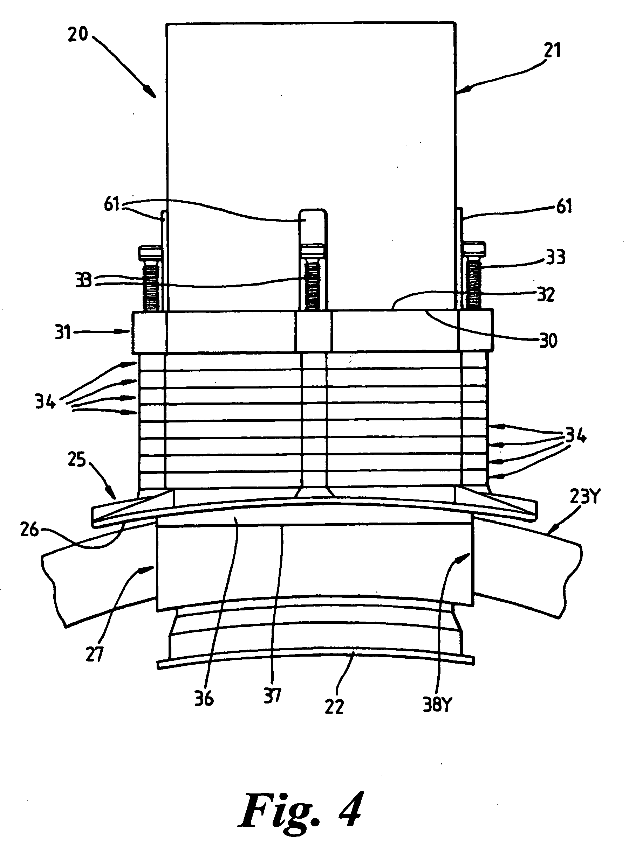

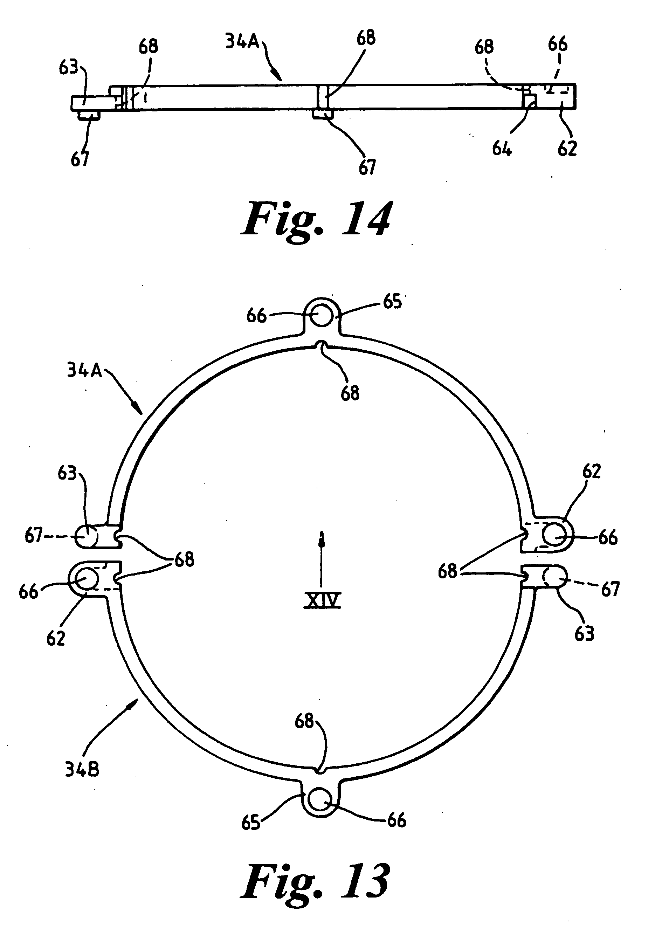

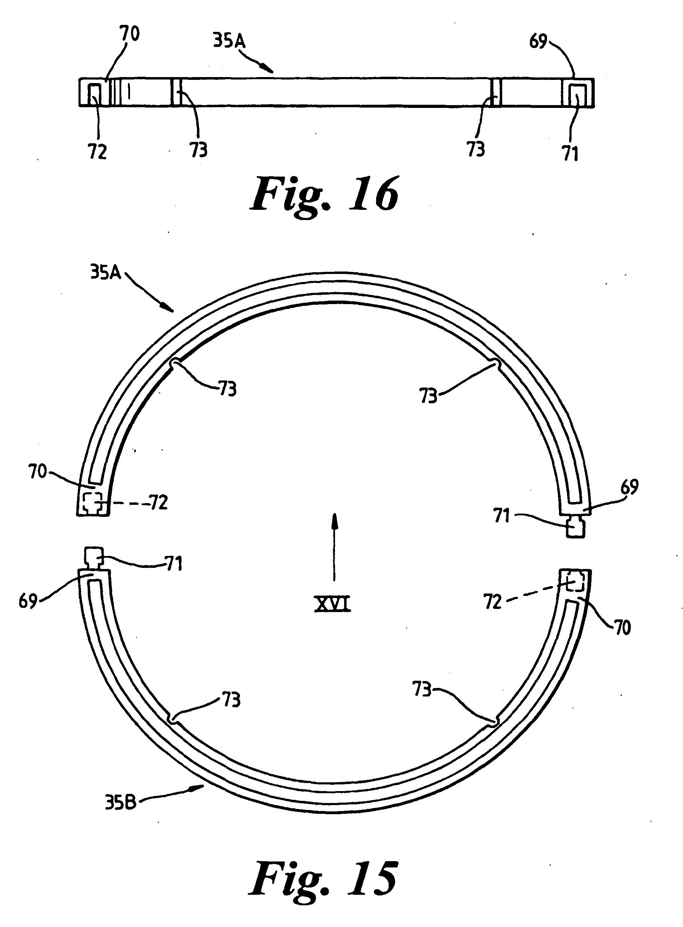

The above features are basically similar to those in the lateral pipe adaptor of GB-A-2 372 083. however, in accordance with the present invention, there is provided a plurality of abutment rings 34 (see also Figures 13 and 14) for selective interposition between the annular abutment member 31 and the movable member 25, and a plurality of spacer rings 35 (see also Figures 15 and 16) having inner and outer diameters equal to those of the seal ring 27 for selective interposition between the seal ring and the movable member 25, selection of one or more abutment rings 34 and/or one or more spacer rings 35 being determined in relation to the difference between the inner and outer diameters of the main pipe 23. The movable member 25 has a pair or concentric annular ribs 36 projecting from its curved face 26, having innermost and outermost diameters equal to those of the sealing ring 27 and spacer rings 35, and having flat annular faces 37 for selective abutment with a spacer ring 35 (as seen in Figures 1, 2 and 3) or with the flat face 29 of the seal ring (as seen in Figure 4).

In Figure 1 the lateral pipe adaptor 20 is shown as initially applied to a hole 38 in the main pipe 23, which may be a structured wall plastic pipe as in Figure 1 of GB-A-2372083 or formed of other materials such as clay, concrete or solid plastic, which is why the main pipe 23 and its hole 38 are shown in outline section only, the flange 22, the seal ring 27. the spacer rings 35 and the rib 36 on the movable member 25 being a push-fit in or through the hole 38.

Upon the movable member 25 being urged away from the abutment member 31, by means of the screws 33 acting through the abutment rings 34, axial compression of the seal ring 27 by the flange 22 on the sleeve 21 causes radial expansion of the seal ring into sealing engagement with all the inner part of the hole 38 in the main pipe 23 and all round the sleeve 21, as shown in Figure 2, even with some of the inner end of the seal ring 27 bulging out beyond the flange 22 into sealing contact with the inside of the pipe 23 round the edge of the hole.

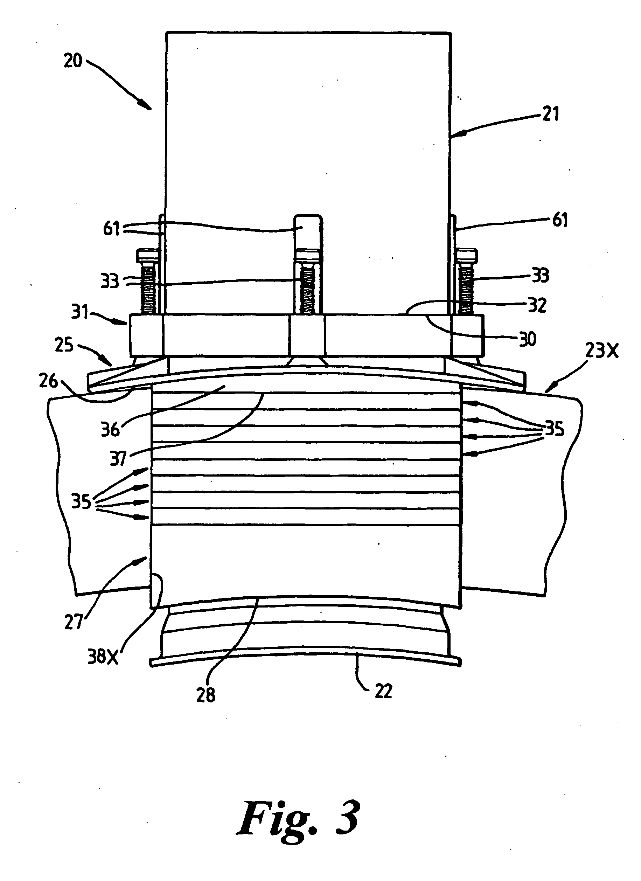

Figure 3 illustrates the maximum thickness of main pipe 23X with which the adaptor 20 can be used, when no abutment rings 34 are required but at least eight spacer rings 35 are needed for the seal ring 27 to project sufficiently from the inner end of the hole 38X in the main pipe to ensure that when the flange 22 of the sleeve 21 is urged into contact with the curved inner end 38 of the seal ring (which condition is not shown) the latter will be forced into good sealing engagement at least all round part of the hole 38X adjacent the inner end of the hole in similar manner to that shown in Figure 2.

Figure 4 illustrates the minimum thickness of main pipe 23Y with which the adaptor 20 can be used, when no spacer rings 35 are required but up to eight abutment rings 34 are needed for correct initial positioning of the seal ring 27 in hole 38Y in the main pipe. The main pipe 23Y in Figure 4 is also of much lesser outside diameter than the main pipes 23 and 23X, so that, whereas in Figures 1, 2 and 3 the movable member 25 contacts the main pipe around the outer edge of the movable member, in Figure 4 contact with the main pipe 23Y by the movable member 25 is over middle areas of its flange 26 adjacent the outer end of the hole 38Y in the main pipe.

Reference will next be made to Figures 5 to 12.

The sleeve 21 has an increasing outer diameter 39 adjacent its flange 22, to promote radial expansion of the seal ring 21 from its face 28 adjacent the flange, particularly to ensure sealing contact all round the inner edge of the hole 38 (or 38X or 38Y). This also helps in securing the adaptor 20 mechanically to the main pipe 23 (or 23X or 23Y), in addition to the location of the outer of the concentric ribs 36 on the movable member 25 within the outer end of the hole.

The sleeve 21 and the movable and abutment members 25 and 31 respectively, are indicated as moulded in plastics, with the curved face 26 of the movable member 25 provided by a curved flange or "saddle" 40 co-moulded with a thin cylindrical wall having bosses 41 with shallow recesses 42 for location of the axial screws 33 projecting from lugs 43 on the abutment member 31, and the lugs 43 are provided with non-circular recesses 44 to accommodate non-rotatable nuts 45 for the axial screws.

For convenience of manufacture and assembly, the movable member 25 is formed in two identical parts 25A, 25B (one only - 25A - being shown in Figures 7 and 8) split on a diametral line and each provided with pairings of projections and recesses 46, 47 and 48, 49, respectively, for engagement with the recesses and projections, respectively, of the other part upon fitting round the sleeve 21, the projections and recesses being provided on or in overlapping saddle portions 50, 51, respectively. Stiffening ribs 52 are provided between the annular wall of the movable member 25 and the saddle 40 adjacent the overlapping portions 50, 51.

Likewise, the abutment member 31 is formed with a split 53 at one side only and provided with overlapping bosses 54, 55 having respectively a projection 56 and a recess 57 for engagement with each other after fitting the abutment member 31 round the sleeve 21 in abutting engagement with the shoulder 30 on the sleeve.

To ensure correct location of the movable member 25 and the seal ring 27 on the sleeve 21, the latter is provided with an axial rib 58 and the movable member and seal are provided with grooves 59, 60 respectively, to mate with the rib. The sleeve 21 also has stiffening ribs 61 located where the screws 33 (carried by the abutment member 31) will be alongside when the tips of the screws are engaged in the recesses 42 in the bosses 41 of the movable member 25.

Reference will now be made to Figures 13 to 16 in describing in more detail the abutment rings 34 and the spacer rings 35 which distinguish the present invention from the lateral pipe adaptor of GB-A-2 372 083.

As with the sleeve 21 and the movable and abutment members 25 and 31 respectively, the abutment rings 34 and the spacer rings 35 are conveniently moulded in plastics, with each formed by two semi-circular parts.

Figure 13 shows the two parts 34A, 34B of an abutment ring, these parts being identical and each provided with two bosses 62, 63, the boss 62 of one having a recess 64 to receive the boss 63 of the other upon fitting of the parts 34A, 34B round the sleeve 21. The bosses 62 and further bosses 65 have shallow recesses 66 for engagement by the screws 33 or by projections 67 on the bosses 63 and 65 of a similar abutment member, or the projections 67 can be engaged in the recesses 42 in the bosses 41 on the movable member 25. To ensure correct location of the abutment rings 34 on the sleeve 21, both parts 34A, 34B are provided with grooves 68 to mate with the rib 58 on the sleeve.

Figure 15 shows the two parts 35A, 35B of a spacer ring, these too being identical and each formed with an H-section throughout except for end portions 69, 70 provided with projections and recesses 71, 72, respectively, for engagement upon fitting of the parts 35A, 35B round the sleeve 21. Both parts have grooves 73 for selective engagement with the rib 58 on the sleeve 21 even though the orientation of the spacer rings around the sleeve is not critical.

## Claims

1. A lateral pipe adaptor (20) for a main pipe (23), comprising a cylindrical sleeve (21) with a flange (22) extending outwardly at one end and adapted at the other end for connection of a branch pipe, an annular movable member (25) slidable on the sleeve and having a concave face (26) towards the flange. (22) of the sleeve (21), an elastomeric seal ring (27) held captive between the flange of the sleeve and the movable member (25), an annular abutment member (31) adjacent the face of the movable member (25) remote from flange (22) of the sleeve (21), at least one projection (30) on the sleeve (21) abutted by the face (32) of the abutment member (31) remote from the movable member (25), and loading means (33) for urging the movable member (25) away from the abutment member (31) to compress the seal ring (27) axially, wherein, in use, the flange (22) of the sleeve (21) is passed through a hole (38) in the main pipe (23) to bring the seal ring (27) within the hole (38), and wherein the axial compression of the seal ring (27) causes radial expansion of the seal ring into sealing engagement all round the sleeve (21) and at least all round the part of the hole (38) in the main pipe (23) adjacent the inner surface of the main pipe, **characterised by** a plurality of abutment rings (34) for selective interposition between the annular abutment member (31) and the movable member (25), and a plurality of spacer rings (35)having inner and outer diameters equal to those of the seal ring (27) for selective interposition between the seal ring (27) and the movable member (25), and wherein the selection of one or more abutment rings (34) and/or one or more spacer rings (35) is determined in relation to the difference between the inner and outer diameters of the main pipe (23).

2. A lateral pipe adaptor as in Claim 1, **characterised in that** the seal ring (27) has a concave inner face (28) matching the curvature of the flange (22) on the sleeve (21), while the outer face (29) of the seal ring (27) is flat, to enable it to have full abutting engagement with a flat spacer ring (35).

3. A lateral pipe adaptor as in Claim 1 or Claim 2, **characterised in that** the movable member (25) has an annular rib or a pair of concentric annular ribs (36) projecting from its curved face (26), having innermost and outermost diameters equal to those of the sealing ring (27) and spacer rings (35), and having a flat annular face or faces (37) for selective abutment with a spacer ring (35) or with the flat face (29) of the seal ring (27).

4. A lateral pipe adaptor as in any one of Claims 1 to 3 **characterised in that** the abutment rings (34) and the spacer rings (35) are moulded in plastics.

5. A lateral pipe adaptor as in any one of Claims 1 to 4, **characterised in that** each of the abutment rings (34) and each of the spacer rings (35) is formed by two semi-annular parts (34A, 34B and 35A, 35B) each provided with a projection (63 or 71) and recess (64 or 72) at respective ends for engagement with the recess (64 or 72) and projection (63 or 71), respectively, of the other part upon fitting of the parts round the sleeve (21).

6. A lateral pipe adaptor as in Claim 5, **characterised in that** the parts (34A, 34B) of the abutment rings (34) have bosses (62, 65) each with a shallow recess (66) in one face and a complementary projection (67) on its opposite face, for registration of the recesses (66) with the axial screws (33), and registration of the projections (67) with the recesses (42) in the bosses (41) on the movable member (25) or with the recesses (66) in the bosses (62, 65) of another abutment ring (34).

7. A lateral pipe adaptor as in any one of Claims 1 to 6, **characterised in that** the abutment rings (34) and the spacer rings (35) are all of equal thickness.

8. A lateral pipe adaptor as in any one of Claims 1 to 6, **characterised in that** one abutment ring (34) and/or one spacer ring (35) is of different thickness to the others to afford intermediate increments in assemblies of abutment rings (34) and/or spacer rings (35).

9. A lateral pipe adaptor as in any one of Claims 1 to 8, **characterised in that** the sleeve (21) is provided with an axial rib (58) and the movable member (25), the sealing ring (27), the abutment rings (34) and the spacer rings (35) are all provided with grooves (59, 60, 68, 73) to mate with the rib (58) on the sleeve (21).

## Patentansprüche

1. Seitenrohranschlussstück (20) für ein Hauptrohr (23), umfassend eine zylindrische Muffe (21), die an einem Ende einen Flansch (22) aufweist, der sich nach außen erstreckt, und am anderen Ende zur Verbindung mit einem Seitenrohr geeignet ist, ein ringförmiges, bewegliches Element (25), das an der Muffe gleitbar ist und zum Flansch (22) der Muffe (21) hin eine konkave Stirnfläche (26) aufweist, einen elastomeren Dichtungsring (27), der zwischen dem Flansch der Muffe und dem beweglichen Element (25) festgehalten ist, ein ringförmiges Stoßelement (31) benachbart zur Stirnfläche des beweglichen Elements (25), die vom Flansch (22) der Muffe (21) entfernt liegt, mindestens einen Vorsprung (30) an der Muffe (21), an dem die Stirnfläche (32) des Stoßelements (31), die vom beweglichen Element (25) entfernt liegt, anstößt, und Lademittel (33), um das bewegliche Element (25) vom Stoßelement (31) weg zu zwingen, um den Dichtungsring (27) axial zusammenzudrücken, wobei in Verwendung der Flansch (22) der Muffe (21) durch ein Loch (38) im Hauptrohr (23) geführt wird, um den Dichtungsring (27) innerhalb des Lochs (38) zu bringen, und wobei das axiale Zusammendrücken des Dichtungsrings (27) die radiale Ausdehnung des Dichtungsrings (27) in einen Dichtungseingriff rund um die Muffe herum (21) und zumindest rund um den ganzen Abschnitt des Lochs (38) im Hauptrohr (23) benachbart zur Innenoberfläche des Hauptrohrs bewirkt, **gekennzeichnet durch** ein Vielzahl an Stoßringen (34) zur selektiven Anordnung zwischen dem ringförmigen Stoßelement (31) und dem beweglichen Element (25) und eine Vielzahl an Abstandshalterringen (35) mit Innen- und Außendurchmessern, die jenen des Dichtungsrings (27) entsprechen, zur selektiven Anordnung zwischen dem Dichtungsring (27) und dem beweglichen Element (25), und wobei die Auswahl von einem oder mehreren Stoßringen (34) und/oder einem oder mehreren Abstandshalterringen (35) im Verhältnis zur Differenz zwischen den Innen- und Außendurchmessern des Hauptrohrs (23) bestimmt wird.

2. Seitenrohranschlussstück nach Anspruch 1, **dadurch gekennzeichnet, dass** der Dichtungsring (27) eine konkave innere Stirnfläche (28) aufweist, die an die Krümmung des Flanschs (22) an der Muffe (21) angepasst ist, während die äußere Stirnfläche (29) des Dichtungsrings (27) flach ist, damit es ihr möglich ist, einen vollkommenen Anstoßeingriff mit einem flachen Abstandshalterring (35) einzugehen.

3. Seitenrohranschlussstück nach Anspruch 1 oder 2, **dadurch gekennzeichnet, dass** das bewegliche Element (25) eine ringförmige Rippe oder ein Paar aus konzentrischen, ringförmigen Rippen (36) aufweist, die von seiner gekrümmten Stirnfläche (26) vorstehen, innerste und äußerste Durchmesser aufweisen, die jenen des Dichtungsrings (27) und der Abstandhalterringe (35) entsprechen und eine flache, ringförmige Stirnfläche oder Stirnflächen (37) zum selektiven Anstoßen an einem Abstandshalterring (35) oder an der flachen Stirnfläche (29) des Dichtungsrings (27) aufweisen.

4. Seitenrohranschlussstück nach einem der Ansprüche 1 bis 3, **dadurch gekennzeichnet, dass** die Stoßringe (34) und die Abstandshalterringe (35) aus Kunststoff geformt sind.

5. Seitenrohranschlussstück nach einem der Ansprüche 1 bis 4, **dadurch gekennzeichnet, dass** jeder der Stoßringe (34) und jeder der Abstandshalterringe (35) von zwei halbringförmigen Teilen (34A, 34B und 35A, 35B) gebildet ist, von denen jedes mit einem Vorsprung (63 oder 71) und einer Vertiefung (64 oder 72) an entsprechenden Enden zum Eingriff in die Vertiefung (64 oder 72) bzw. den Vorsprung (63 oder 71) des anderen Teils beim Anbringen der Teile um die Muffe (21) herum ausgestattet ist.

6. Seitenrohranschlussstück nach Anspruch 5, **dadurch gekennzeichnet, dass** die Teile (34A, 34B) der Stoßringe (34) Lageraugen (62, 65) mit jeweils einer flachen Vertiefung (66) in einer Fläche und einem komplementären Vorsprung (67) an der gegenüberliegenden Fläche für die Übereinstimmung der Vertiefungen (66) mit den Axialschrauben (33) und die Übereinstimmung der Vorsprünge (67) mit den Vertiefungen (42) in den Lageraugen (41) am beweglichen Element (25) oder mit den Vertiefungen (66) in den Lageraugen (62, 65) eines anderen Stoßrings (34) aufweisen.

7. Seitenrohranschlussstück nach einem der Ansprüche 1 bis 6**, dadurch gekennzeichnet, dass** die Stoßringe (34) und die Abstandshalterringe (35) alle die gleiche Dicke aufweisen.

8. Seitenrohranschlussstück nach einem der Ansprüche 1 bis 6, **dadurch gekennzeichnet, dass** ein Stoßring (34) und/oder ein Abstandshalterring (35) eine andere Dicke als alle anderen aufweisen, um Zwischeninkremente in Anordnungen von Stoßringen (34) und/oder Abstandshalterringen (35) zu gestatten.

9. Seitenrohranschlussstück nach einem der Ansprüche 1 bis 8, **dadurch gekennzeichnet, dass** die Muffe (21) mit einer Axialrippe (58) ausgestattet ist und das bewegliche Element (25), der Dichtungsring (27), die Stoßringe (34) und die Abstandshalterringe (35) alle mit Nuten (59, 60, 68, 73) ausgestattet sind, um mit der Rippe (58) an der Muffe (21) zusammenzupassen.

## Revendications

1. Raccord latéral pour tuyau (20) destiné à un tuyau principal (23), comprenant un manchon cylindrique (21) avec une bride (22) s'étendant vers l'extérieur et à une extrémité, et conçue à l'autre extrémité en vue d'un raccordement à un tuyau de branchement, un élément mobile annulaire (25) pouvant glisser sur le manchon et présentant une face concave (26) vers la bride (22) du manchon (21), une bague d'étanchéité élastomère (27) étant maintenue captive entre la bride du manchon et l'élément mobile (25), un élément annulaire formant butée (31) contigu à la face de l'élément mobile (25) à distance de la bride (22) du manchon (21), au moins une protubérance (30) sur le manchon (21) venant en butée par la face (32) de l'élément formant butée (31) à distance de l'élément mobile (25) et un moyen de charge (33) permettant de solliciter l'élément mobile (25) à distance de l'élément formant butée (31) afin de comprimer axialement la bague d'étanchéité (27), dans lequel, en fonctionnement, la bride (22) du manchon (21) traverse un trou (38) ménagé dans le tuyau principal (23) afin d'amener la bague d'étanchéité (27) à l'intérieur du trou (38), et dans lequel la compression axiale de la bague d'étanchéité (27) provoque une dilatation radiale de la bague d'étanchéité en prise d'étanchéité tout autour du manchon (21) et au moins tout autour de la partie du trou (38) dans le tuyau principal (23) contigu à la surface intérieure du tuyau principal, **caractérisé par** une pluralité de bagues formant butée (34) destinées à une interposition sélective entre l'élément annulaire formant butée (31) et l'élément mobile (25), ainsi qu'une pluralité de bagues intercalaires (35) présentant des diamètres intérieur et extérieur égaux à ceux de la bague d'étanchéité (27) en vue d'une interposition sélective entre la bague d'étanchéité (27) et l'élément mobile (25), et dans lequel la sélection de une ou de plusieurs bagues formant butée (34) et/ou de une ou de plusieurs bagues d'espacement (35) est déterminée par rapport à la différence entre les diamètres intérieur et extérieur du tuyau principal (23).

2. Raccord latéral pour tuyau selon la revendication 1, **caractérisé en ce que** la bague d'étanchéité (27) présente une face intérieure concave (28) correspondant à la courbure de la bride (22) sur le manchon (21), alors que la face extérieure (29) de la bague d'étanchéité (27) est plate afin de lui permettre d'avoir une prise complète en butée avec une bague d'espacement plate (35).

3. Raccord latéral pour tuyau selon la revendication 1 ou la revendication 2, **caractérisé en ce que** l'élément mobile (25) possède une nervure annulaire ou une paire de nervures annulaires (36) concentriques dépassant de leur face incurvée (26), présentant des diamètres les plus à l'intérieur et les plus à l'extérieur égaux à ceux de la bague d'étanchéité (27) et des bagues d'espacement (35), et possédant une ou des faces (37) annulaires plates permettant une butée sélective avec une bague d'espacement (35) ou avec la face plate (29) de la bague d'étanchéité (27).

4. Raccord latéral pour tuyau selon l'une quelconque des revendications 1 à 3, **caractérisé en ce que** les bagues formant butée (34) et les bagues d'espacement (35) sont moulées en matière plastique.

5. Raccord latéral pour tuyau selon l'une quelconque des revendications 1 à 4, **caractérisé en ce que** chacune des bagues formant butée (34) et chacune des bagues d'espacement (35) est formée grâce à deux pièces semi annulaires (34A, 34B et 35A, 35B) chacune étant respectivement munie d'une protubérance (63 ou 71) et d'un évidement (64 ou 72) à des extrémités respectives permettant une coopération avec l'évidement (64 ou 72) et la protubérance (63 ou 71), respectivement, de l'autre pièce lors de l'ajustement des pièces autour du manchon (21).

6. Raccord latéral pour tuyau selon la revendication 5, **caractérisé en ce que** les pièces (34A, 34B) des bagues formant butée (34) comportent des bossages (62, 65), chacun comportant un évidement superficiel (66) dans une face et une protubérance complémentaire (67) sur sa face opposée en vue de l'alignement des évidements (66) avec les vis axiales (33) et de l'alignement des protubérances (67) avec les évidements (42) dans les bossages (41) sur l'élément mobile (25) ou avec les évidements (66) dans les bossages (62, 65) d'une autre bague formant butée (34).

7. Raccord latéral pour tuyau selon l'une quelconque des revendications 1 à 6, **caractérisé en ce que** les bagues formant butée (34) et les bagues d'espacement (35) sont toutes d'une épaisseur égale.

8. Raccord latéral pour tuyau selon l'une quelconque des revendications 1 à 6, **caractérisé en ce qu'**une bague formant butée (34) et/ou une bague d'espacement (35) est d'une épaisseur différente par rapport aux autres pour offrir des incréments intermédiaires dans les assemblages de bagues formant butée (34) et/ou de bagues d'espacement (35).

9. Raccord latéral pour tuyau selon l'une quelconque des revendications 1 à 8, **caractérisé en ce que** le manchon (21) est muni d'une nervure axiale (58) et **en ce que** l'élément mobile (25), la bague d'étanchéité (27), les bagues formant butée (34) et les bagues d'espacement (35) sont tous munis de gorges (59, 60, 68, 73) permettant de s'apparier avec la nervure (58) sur le manchon (21).
